(19) Europäisches Patentamt
European Patent Office
Office européen des brevets

(11) Publication number : **0 477 040 A2**

(12) **EUROPEAN PATENT APPLICATION**

(21) Application number : **91308695.5**

(22) Date of filing : **18.09.91**

(51) Int. Cl.[5] : **G06K 9/32,** G06K 9/38

(30) Priority : **18.09.90 JP 247868/90**

(43) Date of publication of application :
**25.03.92 Bulletin 92/13**

(84) Designated Contracting States :
**DE FR GB IT**

(71) Applicant : **NIPPON SHEET GLASS CO., LTD.**
**5-11, 3-Chome Doshomachi**
**Chuo-ku Osaka (JP)**

(72) Inventor : **Ueno, Hiroshi**
**5-11, 3-chome, Doshomachi, Chuo-ku**
**Osaka (JP)**
Inventor : **Nishi, Hisami**
**5-11, 3-chome, Doshomachi, Chuo-ku**
**Osaka (JP)**

(74) Representative : **Jackson, David Spence et al**
**REDDIE & GROSE 16, Theobalds Road**
**London, WC1X 8PL (GB)**

(54) **Method for checking marks.**

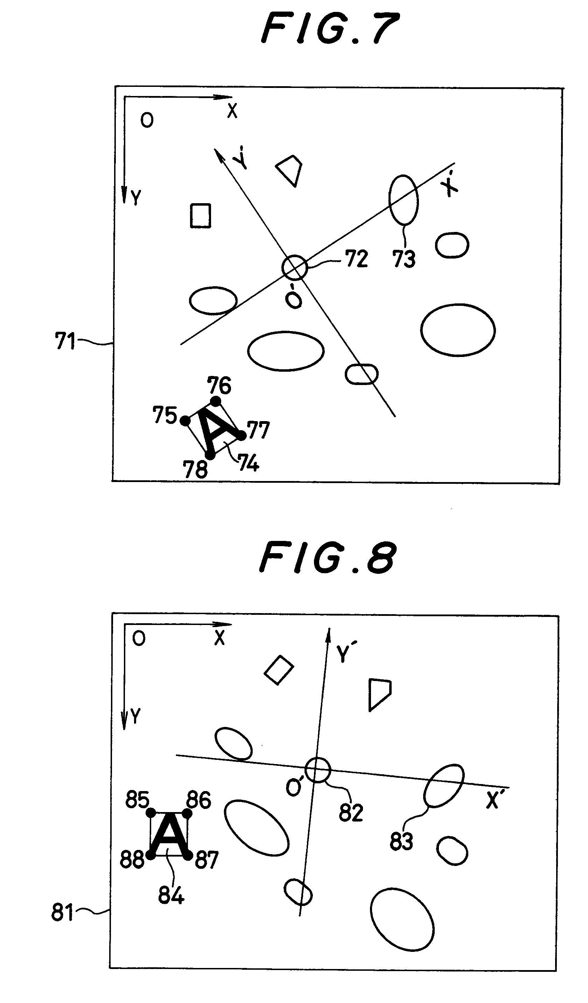

(57) The pixels of an image signal are converted into digital signals each corresponding to a density value. A maximum value and a minimum value, respectively, of the image signal densities of a particular pixel and one or more pixels around the particular pixel are detected, and the particular pixel is converted into a binary value using a threshold which is a median value between the maximum and minimum values detected. Respective characteristic quantities of a plurality of independent patterns which are separate from each other in a standard image are extracted. A relative coordinate system (X',Y'), based on respective position of center of gravity of two independent patterns 82, 83 which can be defined by different characteristic quantities is defined and, respective positions of centers of gravity of and respective characteristic quantities of the plurality of independent patterns in the relative coordinate system are registered. The independent patterns in an input image 81 are correlated with the independent patterns in a reference image (Fig. 7), and characteristic quantities of the corresponding patterns are compared to detect defects of the mark, if any.

EP 0 477 040 A2

FIG.8

## BACKGROUND OF THE INVENTION

### FIELD OF THE INVENTION

The present invention relates to a method for checking a mark, which can be used advantageously in various fields where differences or changes of an objective image based on standard image information are detected, and recognition and control are performed based thereon.

### DESCRIPTION OF RELATED ART

When a mark attached, stamped or otherwise marked on the surface of an article is to be checked by using image processing to see if it is properly indicated as expected, it has been generally the case that pattern matching between reference and objective images is utilizes, or graphic characteristic quantities (for example, circle) of an object to be recognized are pre-registered and differences therefrom are utilized. In order to perform the pattern matching or advance registration of graphic characteristic quantities, it is required to transform a pixel in an image into binary, that is, "1" corresponding to white or "0" corresponding to black. Conventionally, this binary number transformation has been performed by setting up a single threshold over the entire image having a gray scale.

Also, one of fundamental problems involved in this type of pattern matching is in the accuracy of correction of discrepancy in position, rotation or the like of the objective image with regard to the standard image

In the conventional method, the correction of discrepancy in position or rotation has been performed by calculating the center of gravity or first momentum of the inputted image over its entirety and detecting the discrepancy in position or amount of rotation of the inputted image relative to the standard image.

In the aforementioned binary number transformation method, conversion of gray scale data into binary number using a single or fixed threshold when shading occurs in the illumination system often results in that original background portions become pattern portions vice versa. Also, in the aforementioned pattern matching method, alignment or adjustment of position, accuracy of rotation, and contamination of noises give a great influence on the matching of patterns.

### SUMMARY OF THE INVENTION

An object of the present invention is to overcome the problems involved in the conventional method, transform image data into binary number properly even when shading or the like occurs in the illumination system, and detect with a high accuracy discrepancy in position or amount of rotation of an objective image relative to a standard image to thereby check a mark with a high accuracy.

Therefore, the present invention provides a method for checking a mark, comprising the steps of:

converting an image signal for pixels to digital signals each corresponding to densities,

detecting a maximum value and a minimum value, respectively, from said digital signals of a noted pixel and one or more pixels around said noted pixel,

converting said noted pixel into binary number using a variable threshold selected as a medium value between said maximum value and said minimum value,

extracting respective characteristic quantities of a plurality of independent patterns which are separate from each other in a standard image;

defining a relative coordinate system based on respective positions of center of gravitation of two independent patterns which can be defined by different characteristic quantities;

registering respective positions of center of gravitation of and respective characteristic quantities of said plurality of independent patterns, respectively, in said relative coordinate system;

collating said independent patterns in said objective image with said independent patterns in said standard image; and

comparing characteristic quantities between corresponding patterns to discriminate defects of said mark, if any.

Here, the method may further comprise the steps of:

defining said relative coordinate system from two first standard points in said standard image,

registering in advance a position of a letter to be recognized in said relative coordinate system;

detecting two second standard points in an image containing said letter to be recognized in the same manner as said first standard points in said standard image;

defining a second relative coordinate system from said two second standard points;

calculating coordinate position in said second relative coordinate system of said letter to be recognized; and

performing recognition of said letter based on results of said calculation.

In the method for checking a mark according to the present invention, conversion of an inputted image into binary numbers can be performed properly without being adversely affected by unevenness in the density of an objective mark or shading of illumination, and collation of patterns performed in a relative coordinate system defined by two patterns in the image enables highly accurate detection of defects, if any, in the image.

When two patterns are found out in the inputted image, characteristic quantities which are free from being influenced by rotation or discrepancy in position are used so that two patterns for defining a relative coordinate system can be detected accurately.

Calculation of coordinate position of a letter to be recognized for the recognition of the letter makes it unnecessary to use cutting out of the letter to thereby increase the accuracy of recognition.

In the method for checking a mark according to the present invention, a maximum value and a minimum value, respectively, of each minute image area composed of a noted pixel and one or more pixels around the noted pixel are extracted, and for every minute image area a variable threshold for converting data into binary is set up from an actual background density and a density level of a pattern portion. A standard image and an objective image each containing a plurality of discrete, independent patterns are each transformed into a binary number using such thresholds. In each of the images" thus transformed, two of the discrete, independent patterns which can be defined by characteristic amounts differing one from another are selected and respective positions of center of gravitation of the independent patterns in each image are calculated. Then, based on the two positions of center of gravitation of the patterns a relative coordinate system is defined in a plane in which the image concerned exists, and finally collation between the corresponding independent patterns in the standard image and the objective image, respectively, is performed in the relative coordinate systems.

In a preferred embodiment, the positions of the independent patterns are pre-registered in RAM (random access memory) or ROM (read only memory). This makes it possible to perform cutting out of a letter for the recognition of letters at a high speed.

The threshold has a medium density level between the density level of the background portion set up in accordance with the actual density of the background portion and the density level of the pattern portion set up in accordance with the actual density of the pattern portion for every minute region, and uses as a standard for conversion into binary. The object to be converted into binary hence can be properly converted into binary even when the object is under the influence of shading of illumination.

Thereafter, by defining a relative coordinate using two characteristic, independent patterns, pattern matching between the standard and objective images is performed with removing respective amounts of discrepancy in position and of rotation from the standard and objective images, respectively.

The two independent patterns in each image have specific characteristic quantities such as area, circumferential, length and the like which will not be changed depending on discrepancy in position or rotation of the image, so that a relative coordinate can be defined in a high accuracy without being influenced, for example, by noises.

As stated above, cutting out of letters for the recognition of letters can be practiced at a high speed.

The above and other objects, effects, features and advantages of the present invention will become more apparent from the following description of embodiments thereof taken in conjunction with the accompanying drawings.

BRIEF DESCRIPTION OF THE DRAWINGS

Fig. 1 is a flow chart illustrating the procedure of checking a mark according to the method of the present invention;

Fig. 2 is a flow chart illustrating preparation of various images until a binary image can be obtained from an original image;

Fig. 3 is a schematic diagram illustrating extraction of a minimum from 3 X 3 area;

Fig. 4 is a schematic view illustrating preparation of a background image;

Fig. 5 is a schematic diagram illustrating extraction of a maximum from a 3 X 3 area;

Fig. 6 is a view illustrating a procedure of a concrete digitization;

Fig. 7 is a schematic diagram illustrating an inputted image and a relative coordinate;

Fig. 8 is a schematic diagram illustrating an inputted image and a relative coordinate;

Fig. 9 is a schematic diagram illustrating characteristic quantities of an inputted image;

Fig. 10 is a flow chart illustrating processing of collation of particle;

Fig. 11 is a schematic diagram illustrating a method for setting up allowance for particle collation; and

Fig. 12 is a schematic diagram illustrating extraction of characteristic quantities for the recognition of letters.

DESCRIPTION OF PREFERRED EMBODIMENTS

General Explanation:

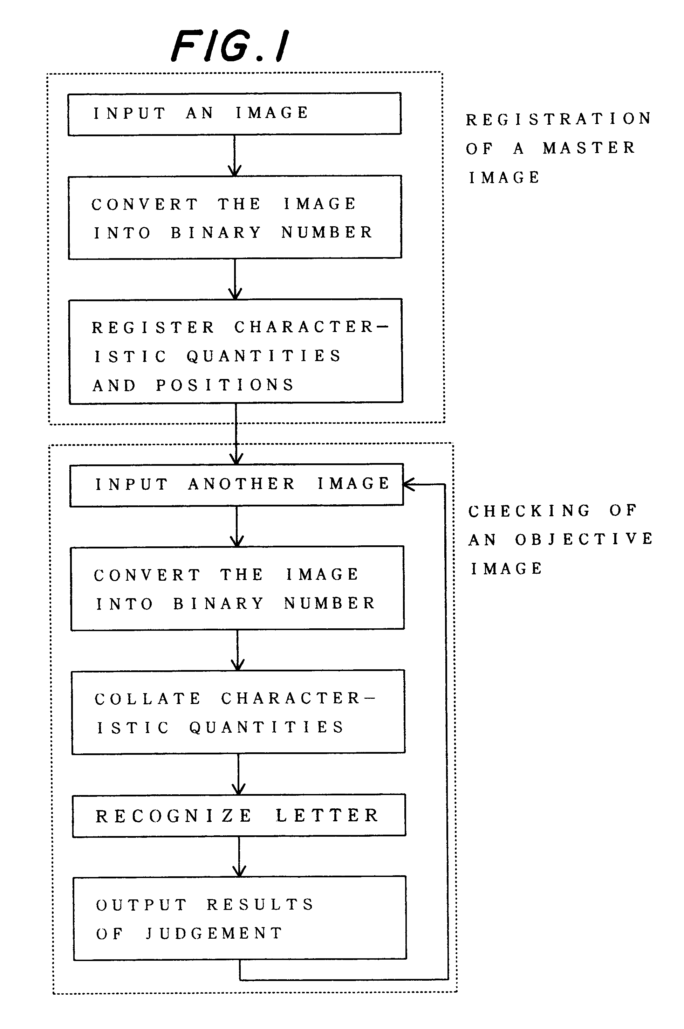

Fig. 1 is a flow chart illustrating the procedure of checking a mark according to the method of the present invention. Fundamentally, the present invention describes a method in which a standard mark is pre-registered in RAM or ROM and then an objective mark to be checked is compared with the memorized standard mark to see is there is any defect in the objective mark.

The procedure of checking a mark includes a plurality of steps which are roughly classified into "registration of a master image" and "checking of an objective image".

First, an image of a mark which is used as a standard is inputted by a television camera, for example. The inputted image having gray scale is converted into binary via an analog to digital converter and a subsequent comparator having a variable threshold to provide a binary image. The binary image has a group of pixels forming a plurality of independent patterns, with predetermined relative distances and or angles between the patterns. For example, if the binary image has three pixels defining three independent patterns in the 2-dimensional plane, its characteristic quantities are represented by the ratio of the distance between a first one of the pixels and a second of the pixels with the distance between the second pixel and the third pixel, and the relative angle formed between two lines, one line passing through the first and second pixels, and the other line passing through the second and third pixels. Respective quantities of the independent patterns or particles in the binary converted image are calculated, and the respective characteristic quantities and respective positions of the particles are pre-registered. The characteristic quantities to be calculated must be those which are free from influence by discrepancy or deviation in position, rotation or the like. The positions to be registered are those in a relative coordinate system referred to hereinbelow.

After completion of the registration of the master image corresponding to a reference mark, the object image is checked. The object image corresponds to a duplicate or reconstituted mark compared to the reference mark. An image information of the object mark which is desired to be checked is inputted by a television camera or the like, binary converted, respective characteristic quantities of a plurality of particles are calculated, and the calculated quantities are compared with the characteristic quantities of the master image registered in advance upon the registration of the master image for each particle.

In the case where the characteristic quantities of the objective image in any one of the particles therein are found to be different from the characteristic quantities of the corresponding particle in the master image as a result of the comparison, it is judged that the objective mark have a defect. For letters, which are difficult to distinguish by comparing the characteristic quantities upon the registration of the master image, letter recognition processing is performed. Thereafter, checking of the objective image is continued similarly.

Hereafter, explanation will be made on each step in more detail.

Binary Conversion:

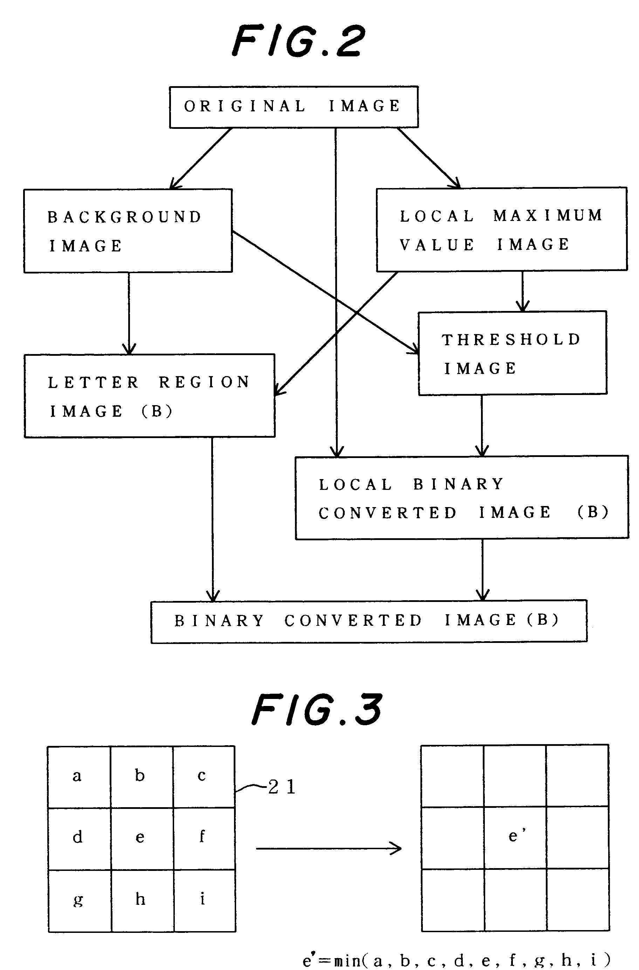

First, a method for binary conversion of an image will be explained referring to Fig. 2, which is a flow chart illustrating preparation of various images until a binary converted image can be obtained from an original image according to an embodiment of the invention. Items to which a symbol B is attached indicate binary images (binary converted images) while others (without symbol B) relate to images of a multiple number system (gray scale images). Here, explanation will be made on the case where a pattern portion has a density level higher than that of a background portion. However, the method of the present invention can also be applied to the reverse case without difficulty, for example, by reversing the density of the original image.

Referring to Fig. 2, explanation will be made on how to create each image.

First, the creation of a background image will be explained. An original image is divided into n x m (or n lines m bits) pixels on an opto-electric device in a TV camera the like, where n or m is positive integer. The respective pixel has gray scale, that is, for example 256 densities and is outputted by using vertical and horizontal sync signals to provide a 8 bit analog to digital (A/D) converter. The A/D converter converts the densities of arrayed m pixels for each line to m byte digital signals to store 8 wide n x m memory until n scanning line is completed to provide a field or frame corresponding to the original image.

Minimum value extraction with respect to an area on the order of a scanning line width is performed for the original image to obtain a background image. Fig. 3 illustrates the minimum value extraction for a minute area 21, that is a region of 3 X 3 pixels on three scanning lines. If the pixels in the minute region 21 have a, b, c, d, e, f, g, h, i hexadecimal densities respectively and if a value e′ is a minimum value, then an operation of replacing all the pixels by the minimum value is performed and is called minimum value extraction. Alternatively, only a central pixel, corresponding in the above example to the pixel of density e, may be replaced with the minimum value. The minimum value extraction can be performed in the same manner when the size of the minute region 21 is changed to 5 X 5 pixels, or to 7 X 7 pixels.

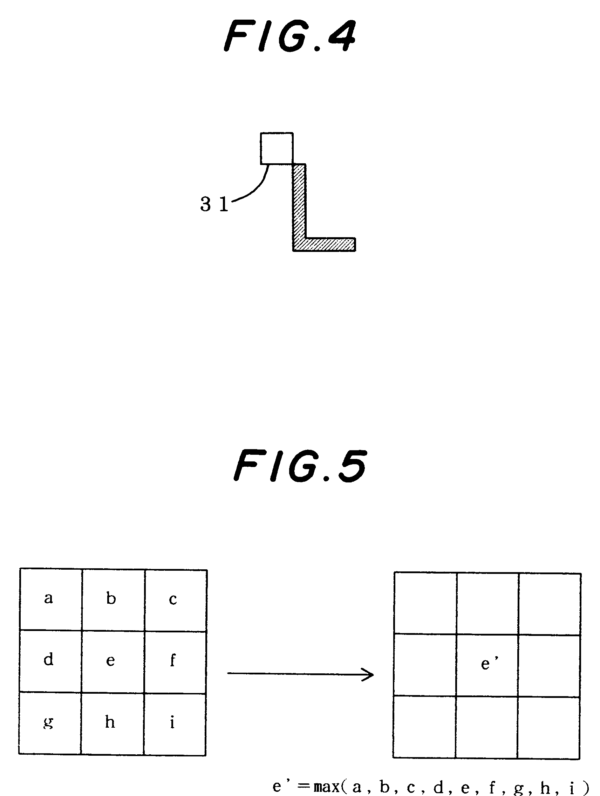

In order to extract a background image from an original image utilizing the minimum value extraction, it is sufficient to practice the minimum value extraction in a region having a width the same as that of the scanning line 31 of the mark in the TV image for all the pixels. Fig. 4 illustrates an example in which the minimum value extraction is practiced with respect to the letter "L". In this case, if the width of the object region for the minimum value extraction is selected to be a little broader than that of the scanning line 31, the selected region also contains a background portion. As a result, the portion corresponding to the mark portion in the original image has a density level of background.

If the background pixels after analog to digital conversion have a matrix of byte codes (hexadecimal) such as 07, 08, 07 at first line, 08, 08, 07 at second line and 07, 08, 08 at third line, while the pattern pixels correspond to a matrix of hexadecimal byte codes such as C6, C7, C6 at one line, C7, C6, C7 at next line and C6, C7, C7 at the subsequent line via a matrix of the transition pixels of 32, 56, .. 99, the minimum value of 07 on the background pixels can be then determined, the maximum value of C7 on the pattern pixels can also be determined. The minimum value of 07 on the background pixels are converted into binary code of "0" or "L" respectively while the maximum value of C7 on the pattern pixels are also converted into binary code of "1" or "H". The transition pixels of 32, 56, .. 99 are converted with the variable threshold of 60 into binary codes of "0", "0", .. "1" respectively through a comparator. In this manner, a background image can be obtained from the original image.

Next, explanation will be made on the preparation of a local maximum value image.

A local maximum value image is prepared by practicing maximum value extraction on an original image as illustrated in Fig. 5 which illustrates an example of maximum value extraction for a minute region of 3 X 3 pixels. Maximum value extraction is an operation of replacing a maximum value in a minute region 31 for a signal of the central pixel in the minute region for all the pixels in the image. As in the minimum value extraction described above, the objective region may be selected to be 5 X 5 pixels, 7 X 7 pixels. A local maximum value image can be obtained by setting up the width of the objective region of the maximum value extraction at a width almost the same as or a little smaller than the scanning line width of the mark in the original image and practicing the maximum value extraction described above.

A proper level for binary converting the original image must for each pixel be between the background image and the local maximum value image as explained above. Hence, a level between the background image and the local maximum value image, for example, a level of a median value, is selected, and an image is prepared in which all the pixels each have a median value between the background image and the local maximum value image. The resulting image is defined as a threshold or transition image. This image is used for the determination of a thresholds for binary conversion. The threshold image has a density level which varies from place to place, thus making it possible to determine a binary conversion level in accordance with the place.

Thereafter, the threshold image the original image are compared with each other for their pixels. Pixels of which the original image has a higher density level are assigned "1", and other pixels are assigned "0" to binary convert the original image and obtain a local binary converted image (B). The binary converted image comprises a mark portion and a background portion separated one from another but still contains pixels which could be regarded as belonging to the pattern portion even in regions consisting of only a background portion. Therefore, it is necessary to roughly separate the image into a letter portion and a pattern portion.

Taking the advantage of its having a high density contrast, each region where one or more letters are included are roughly separated into a letter portion and a pattern portion. Utilizing the background image and the local maximum value image described above, those pixels which have large differences in density level between the both images are each judged to be a letter portion, and a letter portion image (B) is prepared. For example, assuming each pixel in the original image has density levels of 8 bits = 256 gray scales or stages, pixels which have each density difference between the background image and the local maximum value image of about 40 or more may be judged to be a letter portion. It is generally preferred to set this threshold at a level slightly higher than the density difference due to the noise level of the background. However, the threshold varies depending on the image quality, illumination or the like, and strictly speaking it should be determined every time.

Lastly, a logical product of the letter portion image (B) and the local binary converted image (B) is calculated on each pixel to obtain a final binary converted image (B). The finally obtained binary digit image (B) is a proper binary digit image which has been converted into a binary number system using different thresholds from place to place.

While the minimum value extraction is used in the above explanation, it is also possible to input information of an object in the form of a background portion without any pattern portion, for example, by a TV camera, and utilize the data as a background image. This enables speeding up of the processing.

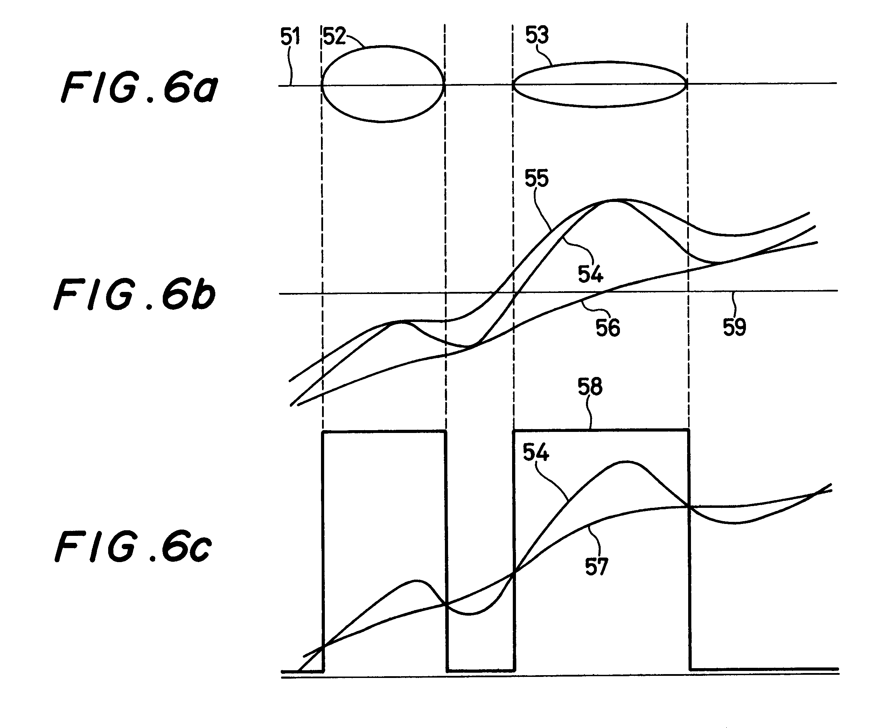

Following the aforementioned creation of images, the present invention will be explained taking a more concrete image as an example with indicating its dimensional density. First explanation will be made on how to obtain a local binary converted image (B) as illustrated in Fig. 2. Fig. 6a illustrates an example of two ellipsoidal figures on which a scanning line 51 comprising a plurality of pixels is traversed. As to density distribution or gray scales of the pixels on the line 51, Fig. 6b illustrates a density level after performing maximum value extraction and minimum value extraction on the density on the line 51. In Fig. 6b, reference numeral 54 denotes a density level on the line 51 while 56 and 55 denote density levels after performing minimum and maximum value extractions respectively. As will be apparent from Fig. 6b, in this example, closer to right hand side is at a higher background density. It is also apparent that practice of the minimum value extraction makes it possible to obtain a local background density from the original density level. On the other hand, a maximum value around the pixel can be obtained of which practice of the maximum value extraction has been performed. It will be readily understood of a fixed threshold according to the conventional method is set up for the density level 54 as indicated, for example, by a line 59, it is impossible to perform binary conversion of data properly. Also, it is understood that a proper binary converted level is an intermediate value between the density level 55 obtained by the maximum value extraction of the original density level 54 and the density level 56 obtained by the minimum value extraction of the original density level 54. Hence, a line 57 in Fig. 6c is a density level set up so as to exist in the middle of the density levels 55 and 56. Binary conversion of the density level 54 using the density level 57 as a threshold gives rise to a density level 58 after binary conversion. This binary conversion operation well corresponds to the binary conversion expected from Fig. 6a.

Collation of Patterns:

Next, explanation will be made on registration of characteristic quantities and of positions and on collation of patterns. Fig. 7 illustrates an example of image inputted, for example, by a TV camera. Within the field of view of the TV camera, i.e., a rectangle 71, there exist a plurality of particles of various figures such as ellipsoid, trapezoid, etc. Here, by the term "particle" it is meant an assemble or set of coupled pixels obtained by digitization of image signals (each signal being called pixel) and converted into binary number.

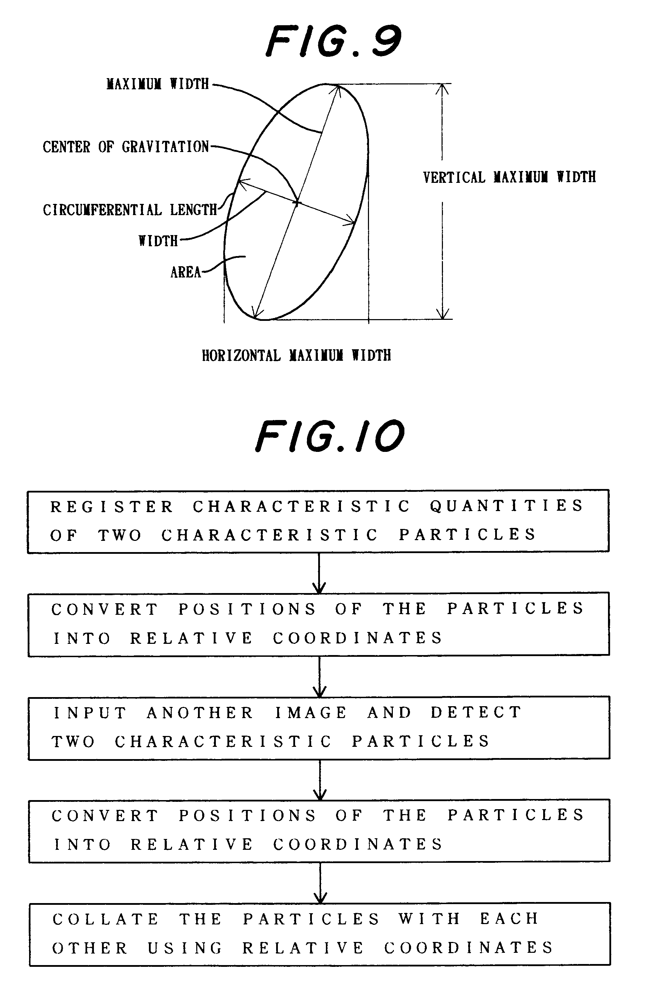

Fig. 8 illustrates of an example of image in which relative positions of particles are the same as the image illustrated in Fig. 7 but the whole image undergoes slipping out or rotation in the field of view of the TV camera. Based on this example, collation between the corresponding particles in the images illustrated in Figs. 7 and 8 is explained below. That is, after image signals are inputted, the positions of the respective particles can be known readily in an XY coordinate system in which origin is placed near the left hand side upper corner as shown in Fig. 7. For each particle, there can readily be obtained various characteristic quantities such as position of center of gravitation, width, circumferential length, maximum length, horizontal maximum width, vertical maximum width, and area as shown in Fig. 9. Then, collation between the corresponding patterns can be performed according to the following steps:

(1) In the image in Fig. 7 which is used as a standard image, two characteristic particles (72 and 73 in Fig. 7) are selected, and full or a part of particulars of the characteristic quantities of the particles as shown in Fig. 9 are registered.

(2) The positions of all the particles in Fig. 7 are converted into an X′Y′ coordinate system in which a line connecting particles 72 and 73 is defined as an axis X′ and a line perpendicular to the axis X′ is defined as an axis Y′. As the position of the particles, position of center of gravitation, for example, is be used, and in this situation relative coordinate of each particle (X′Y′ coordinate system) are is registered.

(3) When the image illustrated in Fig. 8 is inputted as an objective image, particles (82 and 83) corresponding to the particles 72 and 73 in Fig. 7 are detected from among the particles in the objective image with collating the characteristic quantities thereof with the characteristic quantities registered in the step (1) above.

(4) The same coordinate conversion as in the step (2) is performed on the image illustrated in Fig. 8.

(5) The coordinate position obtained in the step (4) above and the coordinate position registered in the step (2) are collated with each other, and detection of corresponding particles is performed.

Fig. 10 is a flow diagram of the processing of collation of particles described in the steps (1) to (5) above. In case where two or more images are to be inputted, the steps (3) and subsequent thereto are practiced.

Then, explanation will be made on how to set up allowance for the position of collation of each particle as follows. That is, after two particles as standards are detected and expressed in a relative coordinate system such as shown in Fig. 7, the positions of the two particles must have coincided with each other. However, in actuality, they do not coincide with each other due to influence of distortion of image pickup system or TV camera system or the like. Therefore, allowance for the collation between the corresponding particles is set up in advance in order to efficiently perform the collation

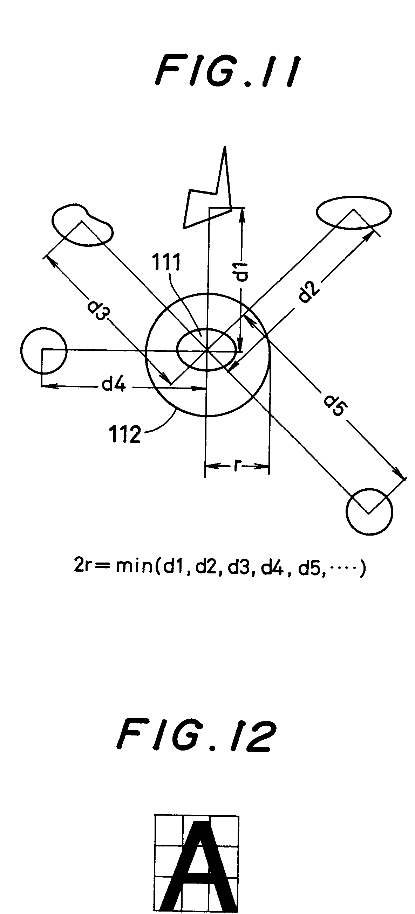

Fig. 11 illustrates how to set up allowance (r). Reference numeral 111 denotes a particle on which allowance is to be set up. Assuming the distances of one particle from other particles in the field of view are defined to be d1, d2, and so on, if allowance is set up at a value equivalent to half the minimum distance among such distances, then a circle 112 having a radius, r, includes within it positions of (center of gravitation of) other particles. This procedure is practiced on all the particles in advance, and when one or more other images are inputted for collation between particles, distances compared in a relative coordinate being within the allowance set in advance indicates that the particles may be judged to correspond to each other.

Cutting Out and Recognition of Letters:

Explanation will be made on cutting out and recognition of letters.

Fig. 7 illustrates an image inputted by a TV camera or the like. Two points 72 and 73 are detected therefrom by the method explained with respect to the collation between patterns described above, and a relative coordinate system X'Y' is determined using the two points. Then, a rectangle including therein a letter 74 to be recognized is defined and respective coordinates of four corner points 75, 76, 77 and 78 are registered. Fig. 8 illustrates an example of another inputted image of which letter recognition is to be performed based on the aforementioned input image. In Fig. 8, the same image as one in Fig. 7 has been rotated and undergone slipping out. Here, two standard points (82 and 83) are detected in the same manner as illustrated in Fig. 7, and a relative coordinate system X'Y' is determined from the two points. Then, respective coordinates of four corner points of a rectangle (85, 86, 87 and 88) corresponding to the four points (75, 76, 77 and 78) of the rectangle surrounding a letter 84 to be recognized are calculated to obtain positions thereof surrounding the letter 84 to be recognized.

As stated above, once a region surrounding a letter is known, recognition of the letter can be performed by partitioning the letter into a plurality of rectangular regions, extracting the number (or proportion) of black pixels contained in each rectangular region, and collating the letter with letters in a dictionary prepared in advance.

The invention may be embodied in other specific forms without departing from the spirit or essential characteristic quantities thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A Method for checking a mark, comprising the steps of:

converting an image signal for pixels to digital signals each corresponding to densities;

detecting a maximum value and a minimum value, respectively, from said digital signals of a noted pixel and one or more pixels around said noted pixel;

converting said noted pixel into binary digits using a threshold selected as a median value between said maximum value and said minimum value detected;

extracting respective characteristic quantities of a plurality of independent patterns which are separate from each other in a standard image;

defining a relative coordinate system based on respective positions of center of gravitation of two independent patterns which can be defined by different characteristic quantities;

registering respective positions of center of gravitation of and respective characteristic quantities of said plurality of independent patterns, respectively, in said relative coordinate system;

collating said independent patterns in said objective image with said independent patterns in said standard image; and

comparing characteristic quantities between corresponding patterns to discriminate defects of said mark, if any.

2. A method as claimed in Claim 1, further comprising the steps of:

defining said relative coordinate system from two first standard points in said standard image;

registering in advance a position of a letter to be recognized in said relative coordinate system;

detecting two second standard points in an image containing said letter to be recognized in the same manner as said first standard points in said standard image;

defining a second relative coordinate system from said two second standard points;

calculating coordinate position in said second relative coordinate system of said letter to be recognized; and

performing recognition of said letter based on results of said calculation.

# FIG. 1

```
┌──────────────────────────┐
│  INPUT  AN  IMAGE        │                    REGISTRATION
└──────────────────────────┘                    OF  A  MASTER
            │                                    IMAGE
            ▼
┌──────────────────────────┐
│  CONVERT  THE  IMAGE     │
│  INTO  BINARY  NUMBER    │
└──────────────────────────┘
            │
            ▼
┌──────────────────────────┐
│  REGISTER  CHARACTER-    │
│  ISTIC  QUANTITIES       │
│  AND  POSITIONS          │
└──────────────────────────┘
            │
            ▼
┌──────────────────────────┐
│  INPUT  ANOTHER  IMAGE   │◄──             CHECKING  OF
└──────────────────────────┘                AN  OBJECTIVE
            │                                IMAGE
            ▼
┌──────────────────────────┐
│  CONVERT  THE  IMAGE     │
│  INTO  BINARY  NUMBER    │
└──────────────────────────┘
            │
            ▼
┌──────────────────────────┐
│  COLLATE  CHARACTER-     │
│  ISTIC  QUANTITIES       │
└──────────────────────────┘
            │
            ▼
┌──────────────────────────┐
│  RECOGNIZE  LETTER       │
└──────────────────────────┘
            │
            ▼
┌──────────────────────────┐
│  OUTPUT  RESULTS         │
│  OF  JUDGEMENT           │
└──────────────────────────┘
```

## *FIG.2*

## *FIG.3*

$$e' = \min(a, b, c, d, e, f, g, h, i)$$

# FIG.4

3 1

# FIG.5

| a | b | c |
|---|---|---|
| d | e | f |
| g | h | i |

$$e' = \max(a, b, c, d, e, f, g, h, i)$$

*FIG.6a*

*FIG.6b*

*FIG.6c*

EP 0 477 040 A2

# FIG.7

# FIG.8

# FIG.9

MAXIMUM WIDTH

CENTER OF GRAVITATION

CIRCUMFERENTIAL LENGTH

WIDTH

AREA

VERTICAL MAXIMUM WIDTH

HORIZONTAL MAXIMUM WIDTH

# FIG.10

REGISTER CHARACTERISTIC QUANTITIES OF TWO CHARACTERISTIC PARTICLES

CONVERT POSITIONS OF THE PARTICLES INTO RELATIVE COORDINATES

INPUT ANOTHER IMAGE AND DETECT TWO CHARACTERISTIC PARTICLES

CONVERT POSITIONS OF THE PARTICLES INTO RELATIVE COORDINATES

COLLATE THE PARTICLES WITH EACH OTHER USING RELATIVE COORDINATES

# FIG.11

$$2r = \min(d1, d2, d3, d4, d5, \cdots)$$

# FIG.12